# EUROPEAN PATENT APPLICATION

(11) **EP 2 325 032 A2**
(43) Date of publication of application: **25.05.2011**
(21) Application number: 10191468.7
(22) Date of filing: 17.11.2010
(51) Int. Cl.: B60H 1/00, B60H 1/32

(54) **Heating and cooling system**

(30) Priority: 19.11.2009 JP 2009264252; 16.09.2010 JP 2010208322
(71) Applicant: Kabushiki Kaisha Toyota Jidoshokki, Kariya-shi, Aichi 448-8671 (JP)
(72) Inventor: Adaniya, Taku, Kariya-shi Aichi 448-8671 (JP); Fukasaku, Hiroshi, Kariya-shi Aichi 448-8671 (JP); Yokomachi, Naoya, Kariya-shi Aichi 448-8671 (JP); Suzuki, Junya, Kariya-shi Aichi 448-8671 (JP)
(74) Representative: TBK

(57) **Abstract**

A heating and cooling system, which includes a refrigerant circulation circuit, first and second targets, first and second refrigerant circuits, a first switching section, and a control device, is disclosed. The first switching section is selectively switched between a first position at which a refrigerant discharged from a discharge area of a compressor is permitted to flow to the first target and a second position at which the refrigerant is not permitted to flow to the first target. The control device switches the first switching section to the first position so that the refrigerant circulation circuit functions as a first refrigerant circuit, thereby heating the first target and cooling the second target. The control device switches the first switching section to the second position so that the refrigerant circulation circuit functions as a second refrigerant circuit, thereby cooling only the second target.

## Description

### BACKGROUND OF THE INVENTION

The present invention relates to a heating and cooling system that is arranged in a refrigerant circulation circuit and includes a first target and a second target that require temperature adjustment.

A typical refrigerant circulation circuit of a vehicle air conditioning system includes a compressor, a condenser, and an expansion valve. The temperature of a refrigerant changes while the refrigerant circulates in the refrigerant circulation circuit. Japanese Laid-Open Patent Publication No. 2004-357458 discloses a technique for cooling (temperature adjustment), for example, oil using the temperature change of the refrigerant. A cooling system for vehicle electric motor disclosed in the above publication includes a vehicle electric motor and an oil circulation path. The vehicle electric motor includes a motor section having a rotor and a stator, and a motor case accommodating the motor section. The oil circulation path circulates the oil that cools the motor section in the motor case between the inside of the motor case and a heat exchanging section that cools the oil. The oil circulation path introduces the oil that is circulated by an oil pump to the motor case. An oil cooler is a container through which a high-pressure liquid refrigerant that is liquefied by the condenser flows. Part of the oil circulation path extends through the oil cooler. When the oil that has cooled the motor section is introduced into the oil cooler via the oil circulation path, the liquid refrigerant introduced into the oil cooler cools the oil.

The oil may also be sealed in, for example, a gear box to lubricate and cool members in the gear box besides the motor section. In the case of the gear box, when the temperature of the gear box is low and the viscosity of the oil is high such as at starting of the engine in winter, the mechanical loss of the gears in the gear box is great. Thus, there are some cases that the oil and the gear box are desired to be heated besides being cooled. However, the cooling system for vehicle electric motor of the above publication only cools the oil.

### SUMMARY OF THE INVENTION

Accordingly, it is an objective of the present invention to provide a heating and cooling system that adjusts the temperature of a first target and a second target using temperature change of a refrigerant in a refrigerant circulation circuit.

To achieve the foregoing objective and in accordance with one aspect of the present invention, a heating and cooling system is provided that includes a refrigerant circulation circuit, first and second targets, a firs refrigerant circuit, a second refrigerant circuit, a first switching section, and a control section. The refrigerant circulation circuit includes a compressor, a condenser, and an expansion valve. The first target and a second target are arranged in the refrigerant circulation circuit, and require temperature adjustment. In the first refrigerant circuit, after being discharged from a discharge area of the compressor and flowing through the first target and the expansion valve, the refrigerant flows through the second target and into a suction area of the compressor. In the second refrigerant circuit, after being discharged from the discharge area and flowing through the condenser and the expansion valve, the refrigerant flows through the second target and into the suction area. The first switching section is located in the refrigerant circuit. The first switching section is selectively switched between a first position, at which the refrigerant discharged from the discharge area is permitted to flow to the first target, and a second position, at which the refrigerant is not permitted to flow to the first target. The control section controls the first switching section. The control section switches the first switching section to the first position such that the refrigerant circulation circuit functions as the first refrigerant circuit, thereby heating the first target and cooling the second target. The control section switches the first switching section to the second position such that the refrigerant circulation circuit functions as the second refrigerant circuit, thereby cooling only the second target.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which,
Fig. 1 is a schematic diagram illustrating a heating and cooling system according to a first embodiment of the present invention;
Fig. 2 is a schematic diagram illustrating a heating and cooling system according to a second embodiment of the present invention; and
Fig. 3 is a schematic diagram illustrating a heating and cooling system according to a third embodiment of the present invention.

### DETAILED DESCRIPTION OF THE PREFERRED EMBODIMENTS

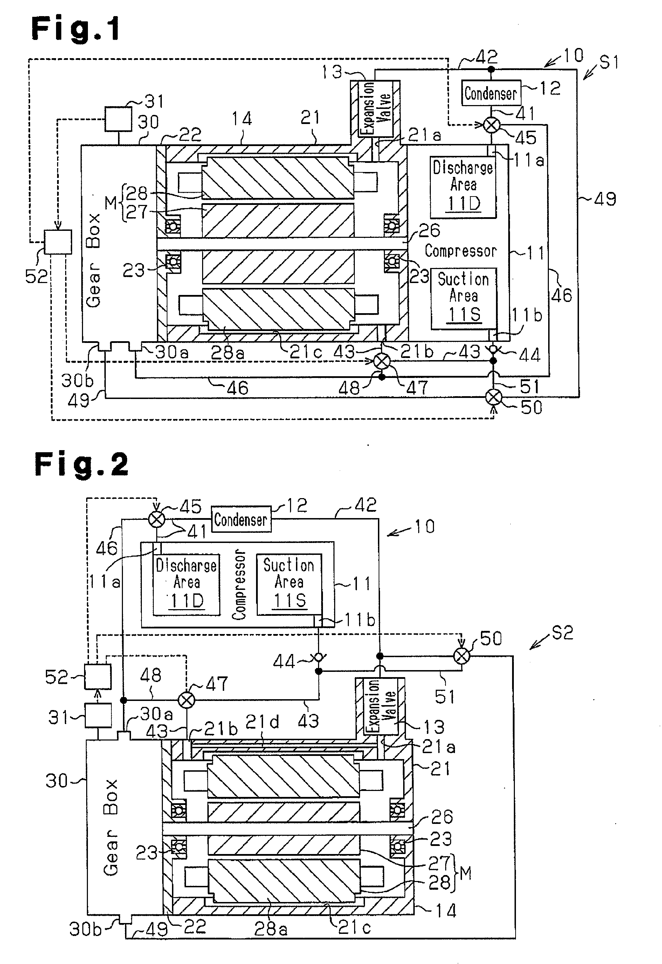

A first embodiment of the present invention will now be described with reference to Fig. 1.

A heating and cooling system S1 of the first embodiment includes a refrigerant circulation circuit 10. The refrigerant circulation circuit 10 includes a compressor 11, a condenser 12, and an expansion valve 13. Furthermore, the heating and cooling system S1 includes a first target and a second target in the refrigerant circulation circuit 10. The first target is a gear box 30 in the first embodiment and requires temperature adjustment by heating and cooling. The second target is a motor section 14 (heat exchanger) in the first embodiment and requires temperature adjustment by cooling. The heating and cooling system S1 of the first embodiment is mounted on a vehicle, which is a hybrid car in the first embodiment. The hybrid car includes an engine (not shown) and the motor section 14 both serving as a driving force for travelling.

The motor section 14 will now be described. The motor section 14 includes a tubular motor housing 21, which has an opening on one end and a bottom portion on the other end, and a drive motor M, which is accommodated in the motor housing 21. A partition wall 22, which closes the opening of the motor housing 21, is provided between the motor housing 21 and the gear box 30. The bottom wall of the motor housing 21 and the partition wall 22 are each provided with a bearing 23. The bearings 23 rotatably support end portions of a drive shaft 26. A rotor 27 is secured to the drive shaft 26, and a stator 28 is secured to an inner circumferential surface of the motor housing 21 to surround the rotor 27. The rotor 27 and the stator 28 are components of the drive motor M.

Radiator fins 28a, which extend along the axial direction of the drive shaft 26, are arranged on the outer circumferential surface of the stator 28 at equal intervals in the circumferential direction of the stator 28. Also, a recess 21c is formed in the inner circumferential surface of the motor housing 21 to avoid interference between the radiator fins 28a and the inner circumferential surface, and to permit the refrigerant to flow through the recess 21 c. Furthermore, an inlet port 21 a, which introduces the refrigerant into the motor housing 21, and an outlet port 21 b, which leads the refrigerant out of the motor housing 21, are formed at parts of the motor housing 21 close to the bottom portion.

The gear box 30 is secured to the wall surface of the partition wall 22 on the far side from the motor section 14. Gears for transmitting drive force of the drive motor M to an axle are accommodated in the gear box 30. The gears are meshed with each other and connected to the drive shaft 26 and the axle. Also, a lubricant is sealed in the gear box 30 for lubricating the gears. Furthermore, a temperature sensor 31, which detects the temperature of the outer surface of the gear box 30, is located on the outer surface of the gear box 30.

A supply port 30a for supplying the refrigerant to the gear box 30 and an exhaust port 30b for discharging the refrigerant from the gear box 30 are formed in the gear box 30. The heating and cooling system S1 of the first embodiment is configured such that the operation mode is selectively switched among a first cooling mode, in which a low-temperature refrigerant is supplied to the gear box 30 (first target) via the supply port 30a, a first heating mode, in which a high-temperature refrigerant is supplied to the gear box 30 (first target) via the supply port 30a, and a first normal mode, in which the refrigerant is not supplied to the gear box 30 (first target). The refrigerant is introduced into the motor housing 21 in all the first cooling mode, the first heating mode, and the first normal mode to cool the motor section 14 (second target).

The compressor 11, which forms part of the refrigerant circulation circuit 10, is located at the bottom portion of the motor housing 21. A rotary shaft (not shown) of the compressor 11 is aligned with the drive shaft 26 of the motor section 14. The rotation of the drive shaft 26 is directly transmitted to the rotary shaft of the compressor 11. That is, the compressor 11 is directly actuated by the drive motor M of the motor section 14. Thus, the compressor 11 is not actuated when the drive motor M is stopped, and the compressor 11 is actuated when the drive motor M is in an actuated state.

A discharge port 11 a, which communicates with a discharge area 11 D, is formed in the compressor 11. The condenser 12 is connected to the discharge port 11a via a discharge passage 41. The high-temperature and high-pressure refrigerant compressed by the compressor 11 is introduced to the condenser 12 via the discharge passage 41, and is cooled in the condenser 12. The condenser 12 is connected to the inlet port 21 a of the motor housing 21 via a passage 42. The expansion valve 13 is provided in the passage 42. The expansion valve 13 is formed integrally with the motor housing 21. The expansion valve 13 decompresses and expands the refrigerant cooled by the condenser 12. The refrigerant that has passed through the expansion valve 13 is introduced into the motor housing 21 from the inlet port 21a. The refrigerant that is introduced into the motor housing 21 exchanges heat with the motor housing 21 and the drive motor M. Thus, the motor section 14 including the motor housing 21 and the drive motor M functions as a heat exchanger in the refrigerant circulation circuit 10. The motor section 14 corresponds to the second target that is cooled by the refrigerant.

Also, a suction port 11b of the compressor 11 is connected to the outlet port 21b of the motor housing 21 via a suction passage 43. The suction port 11b communicates with a suction area 11S of the compressor 11. A check valve 44 is provided in the suction passage 43. The check valve 44 permits the refrigerant to flow only from the motor section 14 to the compressor 11. During the first normal mode, the refrigerant compressed by the compressor 11 flows out of the discharge area 11 D, and passes through the condenser 12, the expansion valve 13, the motor section 14 (heat exchanger), and the check valve 44, and then drawn into the suction area 11 S of the compressor 11. The refrigerant circulates in the refrigerant circulation circuit 10 in this manner.

Also, a discharge-side switching valve 45 is located in the discharge passage 41. The supply port 30a of the gear box 30 is connected to the discharge-side switching valve 45 via a discharge-side switching passage 46. During the first heating mode, the discharge-side switching valve 45 prevents the high-temperature and high-pressure refrigerant compressed by the compressor 11 from flowing toward the condenser 12 via the discharge passage 41, and permits the high-temperature and high-pressure refrigerant to flow toward the gear box 30 via the discharge-side switching passage 46. During the first cooling mode or the first normal mode, the discharge-side switching valve 45 permits the high-temperature and high-pressure refrigerant compressed by the compressor 11 to flow toward the condenser 12 via the discharge passage 41, and prevents the high-temperature and high-pressure refrigerant from flowing toward the gear box 30 via the discharge-side switching passage 46. The discharge passage 41, the discharge-side switching valve 45, and the discharge-side switching passage 46 form a first switching section located in the refrigerant circulation circuit 10. When switched to a first position, the first switching section permits the refrigerant discharged from the discharge area 11 D to flow to the gear box 30 (first target). When switched to a second position, the first switching section does not permit the refrigerant discharged from the discharge area 11 D to flow to the gear box 30 (first target), and permits the refrigerant to flow to the condenser 12.

Also, a suction-side switching valve 47 is provided in the suction passage 43. A suction-side switching passage 48 is connected to the suction-side switching valve 47. The suction-side switching passage 48 is connected to the supply port 30a of the gear box 30 via the discharge-side switching passage 46.

During the first cooling mode, the suction-side switching valve 47 permits the refrigerant that has passed through the expansion valve 13 to flow toward the gear box 30 via the suction-side switching passage 48 after flowing through the motor section 14, and prevents the refrigerant from flowing toward the suction area 11S via the suction passage 43. During the first heating mode or the first normal mode, the suction-side switching valve 47 prevents the refrigerant that has passed through the expansion valve 13 from flowing toward the gear box 30 via the suction-side switching passage 48 after flowing through the motor section 14, and permits the low-temperature refrigerant to flow toward the suction area 11S via the suction passage 43. The suction passage 43, the suction-side switching valve 47, and the suction-side switching passage 48 form a second switching section located in the refrigerant circulation circuit 10. When switched to a first position, the second switching section permits the refrigerant that has passed through the expansion valve 13 to flow to the gear box 30 (first target). When switched to a second position, the second switching section prevents the refrigerant that has passed through the expansion valve 13 from flowing to the gear box 30, and permits the refrigerant to flow to the suction area 11S.

An exhaust passage 49 is connected to the exhaust port 30b of the gear box 30. The exhaust passage 49 is connected to the expansion valve 13 via the passage 42. Also, an exhaust-side switching valve 50 is located in the exhaust passage 49. An exhaust-side switching passage 51 is connected to the exhaust-side switching valve 50. The exhaust-side switching passage 51 is connected to the suction area 11S via the suction passage 43.

During the first cooling mode, the exhaust-side switching valve 50 prevents the refrigerant that has passed through the gear box 30 from flowing toward the expansion valve 13 via the exhaust passage 49 and the passage 42, and permits the refrigerant to flow toward the suction area 11S via the exhaust-side switching passage 51 and the suction passage 43. During the first heating mode, the exhaust-side switching valve 50 permits the refrigerant that has passed through the gear box 30 to flow toward the expansion valve 13 via the exhaust passage 49 and the passage 42, and prevents the refrigerant from flowing toward the suction area 11 S via the exhaust-side switching passage 51 and the suction passage 43. The exhaust passage 49, the exhaust-side switching valve 50, and the exhaust-side switching passage 51 form a third switching section located in the refrigerant circulation circuit 10. When switched to a first position, the third switching section permits the refrigerant that has passed through the gear box 30 to flow to the suction area 11S. When switched to a second position, the third switching section does not permit the refrigerant that has passed through the gear box 30 to flow to the suction area 11S, and permits the refrigerant to flow to the expansion valve 13.

During the first heating mode, the refrigerant discharged from the discharge area 11 D flows through the gear box 30, the expansion valve 13, and the motor section 14, and then flows into the suction area 11S. The compressor 11, the discharge passage 41, the discharge-side switching valve 45, the discharge-side switching passage 46, the gear box 30, the exhaust passage 49, the exhaust-side switching valve 50, the passage 42, the expansion valve 13, the motor housing 21, the suction-side switching valve 47, the check valve 44, and the suction passage 43, through which the refrigerant flows during the first heating mode, form a first refrigerant circuit.

Also, during the first normal mode, the refrigerant discharged from the discharge area 11 D flows to the suction area 11S without flowing through the gear box 30. The compressor 11, the discharge-side switching valve 45, the discharge passage 41, the condenser 12, the passage 42, the expansion valve 13, the motor housing 21, the suction-side switching valve 47, the check valve 44, and the suction passage 43, through which the refrigerant flows during the first normal mode, form a second refrigerant circuit.

During the first cooling mode, the refrigerant discharged from the discharge area 11 D flows through the condenser 12 and the expansion valve 13, and then flows through the motor section 14 and the gear box 30, and reaches the suction area 11S. The compressor 11, the discharge-side switching valve 45, the discharge passage 41, the condenser 12, the passage 42, the expansion valve 13, the motor housing 21, the suction passage 43, the suction-side switching valve 47, the suction-side switching passage 48, the discharge-side switching passage 46, the gear box 30, the exhaust passage 49, the exhaust-side switching valve 50, and the exhaust-side switching passage 51, through which the refrigerant flows during the first cooling mode, form a third refrigerant circuit.

The heating and cooling system S1 includes a control section, which is a control device 52 in the first embodiment. The temperature sensor 31, the discharge-side switching valve 45, the suction-side switching valve 47, and the exhaust-side switching valve 50 are electrically connected to the control device 52. The control device 52 controls opening and closing of the switching valves 45, 47, 50. The temperature sensor 31 detects the temperature of the outer surface of the gear box 30, and the detected temperature information is sent to the control device 52. The control device 52 determines the temperature in the gear box 30 from the temperature of the outer surface of the gear box 30 based on a map prepared in advance. The control device 52 controls opening and closing of the switching valves 45, 47, 50 based on the temperature in the gear box 30. As a result, the refrigerant circulation circuit 10 serves as one of the first to third refrigerant circuits.

When the temperature in the gear box 30 is within a predetermined temperature range, the control device 52 controls opening and closing of the switching valves 45, 47, 50 such that the heating and cooling system S1 operates in the first normal mode. When the temperature in the gear box 30 exceeds the predetermined temperature range, the control device 52 switches the operation mode of the heating and cooling system S1 from the first normal mode to the first cooling mode such that the temperature in the gear box 30 falls within the predetermined temperature range (target temperature). When the temperature in the gear box 30 is below the predetermined temperature range, the control device 52 switches the operation mode of the heating and cooling system S1 from the first normal mode to the first heating mode such that the temperature in the gear box 30 falls within the predetermined temperature range (target temperature).

The flow of the refrigerant in the heating and cooling system S1 will now be described.

When the temperature in the gear box 30 is within the predetermined temperature range, the control device 52 switches the operation mode of the heating and cooling system S1 to the first normal mode. The control device 52 controls the discharge-side switching valve 45 to permit the refrigerant in the discharge area 11 D to flow toward the condenser 12 and to prevent the refrigerant from flowing toward the gear box 30. Also, the control device 52 controls the suction-side switching valve 47 to prevent the refrigerant that has passed through the motor housing 21 from flowing toward the gear box 30 and to permit the refrigerant to flow toward the suction area 11S. The control device 52 controls the discharge-side switching valve 45 and the suction-side switching valve 47 in this manner so that the refrigerant flows through the second refrigerant circuit.

That is, the control device 52 switches the first switching section to the second position to prevent the high-temperature and high-pressure refrigerant compressed in the compressor 11 from flowing to the gear box 30, and switches the second switching section to the second position to permit the refrigerant that has passed through the expansion valve 13 and flowed through the motor housing 21 to flow to the suction area 11S such that the refrigerant circulation circuit 10 functions as the second refrigerant circuit.

As a result, the high-temperature refrigerant is introduced into the condenser 12 via the discharge-side switching valve 45 and the discharge passage 41. After being cooled and condensed in the condenser 12, the refrigerant is decompressed and expanded in the expansion valve 13. The refrigerant that has passed through the expansion valve 13 is introduced into the motor housing 21 via the inlet port 21a, and is subjected to heat exchange in the motor housing 21. The low-temperature refrigerant that has passed through the motor housing 21 is led out to the suction passage 43 from the outlet port 21 b, flows through the suction-side switching valve 47 and the check valve 44, and then drawn into the suction area 11S via the suction port 11 b.

As a result, during the first normal mode, the refrigerant flows through the compressor 11, the condenser 12, the expansion valve 13, and the motor housing 21 (heat exchanger), which form the second refrigerant circuit. Accordingly, the motor section 14 is cooled while the gear box 30 is not cooled or heated (temperature adjustment is not performed).

When the temperature in the gear box 30 is below the predetermined temperature range, for example, during starting of the hybrid car in winter, the control device 52 switches the operation mode of the heating and cooling system S1 from the first normal mode to the first heating mode. During starting of the hybrid car, the motor section 14 is actuated, thereby actuating the compressor 11 and operating the gear box 30.

During the first heating mode, the control device 52 controls the discharge-side switching valve 45 to permit the refrigerant in the discharge area 11 D to flow toward the gear box 30 and to prevent the refrigerant from flowing toward the condenser 12. Also, the control device 52 controls the exhaust-side switching valve 50 to permit the refrigerant in the gear box 30 to flow toward the expansion valve 13 and to prevent the refrigerant from flowing toward the suction area 11S. Furthermore, the control device 52 controls the suction-side switching valve 47 to permit the refrigerant in the motor housing 21 to flow toward the suction area 11S and to prevent the refrigerant from flowing toward the gear box 30. The control device 52 controls the discharge-side switching valve 45, the suction-side switching valve 47, and the exhaust-side switching valve 50 in this manner so that the refrigerant flows through the first refrigerant circuit.

That is, the control device 52 switches the first switching section to the first position to permit the high-temperature and high-pressure refrigerant compressed by the compressor 11 to flow to the gear box 30, and switches the third switching section to the second position to permit the refrigerant that has passed through the gear box 30 to flow to the expansion valve 13 such that the refrigerant circulation circuit 10 functions as the first refrigerant circuit. Furthermore, the control device 52 switches the second switching section to the second position to prevent the refrigerant that has passed through the expansion valve 13 from flowing to the gear box 30. As a result, the high-temperature refrigerant flows toward the gear box 30 via the discharge-side switching valve 45 and the discharge-side switching passage 46, and the high-temperature and high-pressure refrigerant is supplied to the gear box 30 via the supply port 30a. Then, the refrigerant exchanges heat with the lubricant and the gears in the gear box 30 so that the lubricant and the gears are heated and the refrigerant is cooled and condensed.

Also, the refrigerant that is cooled in the gear box 30 is discharged from the gear box 30 via the exhaust port 30b, flows through the exhaust passage 49, the exhaust-side switching valve 50, and the passage 42, and then is introduced into the expansion valve 13. The refrigerant is decompressed and expanded by the expansion valve 13. Thereafter, the refrigerant that has passed through the expansion valve 13 is introduced into the motor housing 21 via the inlet port 21 a. Furthermore, the low-temperature refrigerant that has passed through the motor housing 21 is led out to the suction passage 43 from the outlet port 21 b, flows through the suction-side switching valve 47 and the check valve 44, and is then drawn into the suction area 11S via the suction port 11 b.

As a result, during the first heating mode, the refrigerant flows through the compressor 11, the gear box 30 (condenser), the expansion valve 13, and the motor section 14 (heat exchanger), which form the first refrigerant circuit. Accordingly, the high-temperature refrigerant is introduced into the gear box 30 so that the gear box 30 is heated, and the low-temperature refrigerant is introduced into the motor section 14 so that the motor section 14 is cooled. That is, heating of the gear box 30 and cooling of the motor section 14 are performed during the first heating mode.

When the temperature in the gear box 30 exceeds the predetermined temperature range, for example, during high-load operation of the hybrid car in summer, the control device 52 switches the operation mode of the heating and cooling system S1 from the first normal mode to the first cooling mode. During high-load operation of the hybrid car, the motor section 14 is actuated, thereby actuating the compressor 11 and operating the gear box 30.

The control device 52 controls the discharge-side switching valve 45 to permit the refrigerant in the discharge area 11 D to flow toward the condenser 12 and prevents the refrigerant from flowing toward the gear box 30. Also, the control device 52 controls the suction-side switching valve 47 to permit the refrigerant that has passed through the motor housing 21 to flow toward the gear box 30 and to prevent the refrigerant from flowing toward the suction area 11S. Furthermore, the control device 52 controls the exhaust-side switching valve 50 to permit the refrigerant that has passed through the gear box 30 to flow toward the suction area 11S and to prevent the refrigerant from flowing toward the expansion valve 13. The control device 52 controls the discharge-side switching valve 45, the suction-side switching valve 47, and the exhaust-side switching valve 50 in this manner so that the refrigerant flows through the third refrigerant circuit.

That is, the control device 52 switches the first switching section to the second position to prevent the high-temperature and high-pressure refrigerant compressed in the compressor 11 from flowing to the gear box 30, and switches the second switching section to the first position to permit the refrigerant that has passed through the expansion valve 13 to flow to the gear box 30 such that the refrigerant circulation circuit 10 functions as the third refrigerant circuit. Furthermore, the control device 52 switches the third switching section to the first position to permit the refrigerant that has passed through the gear box 30 to flow to the suction area 11S.

Then, the high-temperature and high-pressure refrigerant that is compressed in the compressor 11 is introduced into the condenser 12 via the discharge-side switching valve 45 and the discharge passage 41. After being cooled and condensed in the condenser 12, the refrigerant is decompressed and expanded in the expansion valve 13. The refrigerant that has passed through the expansion valve 13 is introduced into the motor housing 21 via the inlet port 21 a, and exchanges heat in the motor housing 21.

The refrigerant that has passed through the motor housing 21 is supplied to the gear box 30 from the supply port 30a via the suction passage 43, the suction-side switching valve 47, the suction-side switching passage 48, and the discharge-side switching passage 46. In the gear box 30, the refrigerant exchanges heat with the lubricant and the gears so that the lubricant and the gears are cooled and the refrigerant is heated. The refrigerant in the gear box 30 is discharged from the exhaust port 30b to the exhaust passage 49, flows through the exhaust-side switching valve 50, the exhaust switching passage 51, the suction passage 43, and the check valve 44, and is drawn into the suction area 11S via the suction port 11 b.

As a result, during the first cooling mode, the refrigerant flows in the compressor 11, the condenser 12, the expansion valve 13, the motor housing 21 (heat exchanger), and the gear box 30, which form the third refrigerant circuit. Accordingly, the low-temperature refrigerant is introduced into the gear box 30 so that the gear box 30 is cooled, and the low-temperature refrigerant is introduced into the motor section 14 so that the motor section 14 is cooled. That is, cooling of the gear box 30 and cooling of the motor section 14 are performed during the first cooling mode.

The first embodiment has the following advantages.
(1) When the temperature in the gear box 30 is below the predetermined temperature range, the refrigerant circulation circuit 10 functions as the first refrigerant circuit. The refrigerant flowing through the refrigerant circulation circuit 10 is permitted to flow through the first refrigerant circuit so that the refrigerant discharged from the compressor 11 is supplied to the gear box 30. Since the temperature of the refrigerant discharged from the compressor 11 is high, the high-temperature refrigerant heats the lubricant and the gears in the gear box 30. Also, when the temperature in the gear box 30 is within the predetermined temperature range, the refrigerant circulation circuit 10 functions as the second refrigerant circuit. The refrigerant flowing through the refrigerant circulation circuit 10 is thus permitted to flow through the second refrigerant circuit so that the refrigerant that has passed through the expansion valve 13 is supplied to the motor section 14, and not supplied to the gear box 30. Since the temperature of the refrigerant that has passed through the expansion valve 13 is low, the low-temperature refrigerant cools the motor section 14. Thus, cooling and heating of the gear box 30 (temperature adjustment) and cooling of the motor section 14 (temperature adjustment) are performed using the refrigerant by integrating the gear box 30 (first target) and the motor section 14 (second target) in the refrigerant circulation circuit 10, and switching the passage through which the refrigerant flows between the first refrigerant circuit and the second refrigerant circuit.
(2) When the temperature in the gear box 30 exceeds the predetermined temperature range, the refrigerant circulation circuit 10 functions as the third refrigerant circuit. The refrigerant flowing through the refrigerant circulation circuit 10 is permitted to flow through the third refrigerant circuit so that the refrigerant that has passed through the expansion valve 13 is supplied to the gear box 30. Since the temperature of the refrigerant that has passed through the expansion valve 13 is low, the low-temperature refrigerant cools the lubricant and the gears in the gear box 30. Thus, the gear box 30 is cooled using the refrigerant by integrating the gear box 30 in the refrigerant circulation circuit 10, and switching the refrigerant circuit to the third refrigerant circuit among the first to third refrigerant circuits. Therefore, the structure for cooling and heating the gear box 30 is simplified as compared to, for example, the case in which a cooling portion for cooling the gear box 30 and a heating portion for heating the gear box 30 are separately provided.
(3) The motor section 14 functions as the heat exchanger during the first heating mode and the first cooling mode in addition to the first normal mode. That is, the low-temperature refrigerant that has passed through the expansion valve 13 is introduced into the motor housing 21. Thus, the low-temperature refrigerant cools the motor housing 21 and the drive motor M while exchanging heat of the refrigerant that has passed through the expansion valve 13.
(4) The refrigerant circulation circuit 10 includes the gear box 30 as the first target. Since the gear box 30 is for transmitting drive power of the drive motor M to the axle, the motor section 14 is arranged next to the gear box 30. According to the heating and cooling system S1, the drive motor M and the motor housing 21 of the motor section 14 arranged next to the gear box 30 are permitted to function as the heat exchanger while it is possible to cool and heat the gear box 30. Thus, the size of the heating and cooling system S1 is reduced as compared to the case in which the heat exchanger is separately provided.
(5) The compressor 11 is directly actuated by the drive force of the drive motor M. That is, the drive force of the hybrid car is used as the drive force of the air conditioning system. When the drive motor M is actuated and the gear box 30 is operating, the compressor 11 is actuated. Thus, the refrigerant is compressed, and the refrigerant circulates in the refrigerant circulation circuit 10. Thus, cooling and heating of the gear box 30 and cooling of the motor section 14 are reliably performed using the refrigerant that circulates in the refrigerant circulation circuit 10 while changing its temperature.
(6) The expansion valve 13 is integrated with the motor housing 21 of the motor section 14. Thus, the refrigerant that has passed through the expansion valve 13 is directly introduced into the motor section 14. This increases the amount of energy used for the heat exchange between the refrigerant and the motor section 14, thereby improving the heat exchange efficiency between the motor section 14 and the refrigerant as compared to, for example, the case in which a passage is arranged between the expansion valve 13 and the motor section 14. Thus, the drive motor M and the motor housing 21 are efficiently cooled.
(7) The radiator fins 28a are formed on the stator 28 of the drive motor M. The radiator fins 28a increase the contact area between the stator 28 and the refrigerant. Thus, the stator 28 is efficiently cooled.
(8) The partition wall 22 is arranged between the motor housing 21 of the motor section 14 and the gear box 30. The partition wall 22 partitions the gear box 30 and the motor housing 21. Thus, during the first heating mode, the high-temperature refrigerant supplied to the gear box 30 to heat the gear box 30 is prevented from flowing into the motor housing 21. This prevents the drive motor M in the motor housing 21 from being heated.
(9) The heating and cooling system S1 includes the third switching section, which switches the communication of the exhaust port 30b of the gear box 30 with the suction area 11S or the expansion valve 13. The third switching section includes the exhaust passage 49, which connects the exhaust port 30b to the expansion valve 13 via the passage 42, the exhaust-side switching valve 50 located in the exhaust passage 49, and the exhaust switching passage 51, which connects the exhaust-side switching valve 50 to the suction area 11 S via part of the suction passage 43. The third switching section permits the refrigerant heated in the gear box 30 to be drawn into the suction area 11S, and the refrigerant cooled in the gear box 30 to be introduced into the expansion valve 13, and forms the refrigerant circulation circuit 10.

A second embodiment of the present invention will now be described with reference to Fig. 2. In the following description, like or the same reference numerals are given to those components that are like or the same as the corresponding components of the first embodiment and detailed explanations are omitted or simplified.

The refrigerant circulation circuit 10 of a heating and cooling system S2 according to the second embodiment includes the first target, which is the gear box 30 in the second embodiment, and the second target, which is the motor section 14 (heat exchanger) in the second embodiment, in addition to the compressor 11, the condenser 12, and the expansion valve 13. In the second embodiment, the compressor 11 is not actuated by the drive fore of the drive motor M in the motor section 14, but is actuated by a non-illustrated drive source (for example, an electric motor).

As shown in Fig. 2, the condenser 12 is connected to the discharge port 11a of the compressor 11 via the discharge passage 41. The inlet port 21 a of the motor housing 21 is connected to the condenser 12 via the passage 42. The expansion valve 13 is integrally formed with the motor housing 21 in the passage 42.

Also, the suction port 11b of the compressor 11 is connected to the outlet port 21b of the motor housing 21 via the suction passage 43. The suction port 11 b communicates with the suction area 11S of the compressor 11. The check valve 44 is located in the suction passage 43. Also, the discharge-side switching valve 45 is provided in the discharge passage 41 in the heating and cooling system S2. The supply port 30a of the gear box 30 is connected to the discharge-side switching valve 45 via the discharge-side switching passage 46. The discharge-side switching valve 45, the discharge passage 41, and the discharge-side switching passage 46 form the first switching section as in the first embodiment.

Also, the suction-side switching valve 47 is provided in the suction passage 43. The suction-side switching passage 48 is connected to the suction-side switching valve 47. The suction-side switching passage 48 is connected to the supply port 30a of the gear box 30 via the discharge-side switching passage 46. The suction passage 43, the suction-side switching valve 47, and the suction-side switching passage 48 form the second switching section as in the first embodiment.

The exhaust passage 49 is connected to the exhaust port 30b of the gear box 30. The exhaust passage 49 is connected to the condenser 12 via the passage 42. The exhaust-side switching valve 50 is provided in the exhaust passage 49. The exhaust-side switching passage 51 is connected to the exhaust-side switching valve 50. The exhaust-side switching passage 51 is connected to the suction area 11S via the suction passage 43. The exhaust-side switching valve 50 switches the paths between the first cooling mode and the first heating mode as in the first embodiment. The exhaust passage 49, the exhaust-side switching valve 50, and the exhaust-side switching passage 51 form the third switching section as in the first embodiment.

Also, in the motor housing 21, the inlet port 21 a is located in the motor housing 21 close to the bottom portion. The outlet port 21 b is located in the motor housing 21 close to the partition wall 22. An oil return passage 21 d, which connects the inlet port 21a to the outlet port 21 b, is formed in the circumferential wall of the motor housing 21, that is, at the section between the outer circumferential surface and the inner circumferential surface of the motor housing 21.

The second embodiment has the following advantages in addition to the advantages of the first embodiment.
(10) The refrigerant that circulates in the refrigerant circulation circuit 10, the first refrigerant circuit, the second refrigerant circuit, and the third refrigerant circuit includes a refrigerating machine oil. Since the oil return passage 21d is formed in the motor housing 21, the refrigerating machine oil is returned to the outlet port 21b passing through the oil return passage 21d when the refrigerating machine oil is separated from the refrigerant that has passed through the expansion valve 13. Since the refrigerating machine oil returned to the outlet port 21 b is directly introduced into the compressor 11 during the first heating mode and the normal mode, the refrigerating machine oil lubricates the compressor 11. The refrigerating machine oil returned to the outlet port 21 b is supplied to the gear box 30 to cool the gear box 30, and further introduced into the compressor 11 to lubricate the compressor 11 during the first cooling mode.
(11) The inlet port 21a is formed in the motor housing 21 close to the bottom portion, and the outlet port 21 b is formed in the motor housing 21 close to the partition wall 22. Thus, the refrigerant introduced into the motor section 14 via the inlet port 21a flows across the entire motor housing 21 and is led to the outside of the motor housing 21 from the outlet port 21 b. Accordingly, the refrigerant efficiently cools the motor housing 21 and the drive motor M.

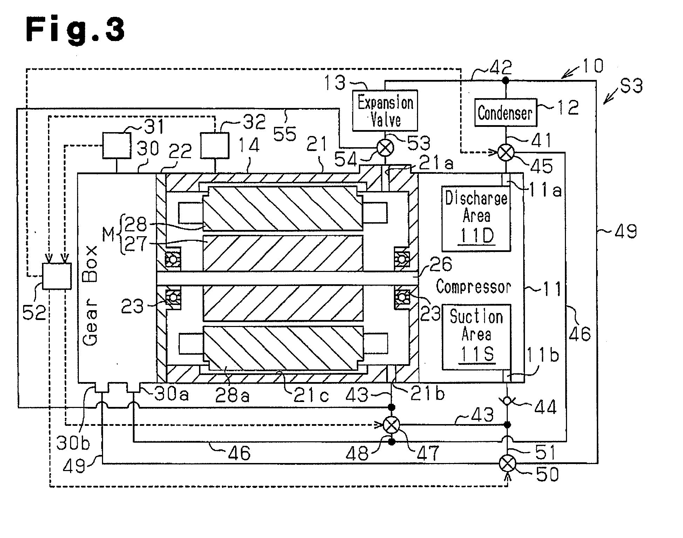

A third embodiment of the present invention will now be described with reference to Fig. 3. In the following description, like or the same reference numerals are given to those components that are like or the same as the corresponding components of the first embodiment and detailed explanations are omitted or simplified.

As shown in Fig. 3, in a heating and cooling system S3, the expansion valve 13 and the inlet port 21 a are connected to each other by a connection passage 53. A passage switching valve 54 is provided in the connection passage 53 downstream of the expansion valve 13 and upstream of the motor section 14. The suction passage 43 is connected to the passage switching valve 54 via a bypass path 55. The bypass path 55 connects the passage switching valve 54 to the section in the suction passage 43 downstream of the motor section 14 and upstream of the suction-side switching valve 47. The connection passage 53, the passage switching valve 54, the bypass path 55, and the suction passage 43 form a fourth switching section. The bypass path 55 may be located in the circumferential wall of the motor housing 21 of the motor section 14, that is, at the section between the outer circumferential surface and the inner circumferential surface of the motor housing 21. Alternatively, the bypass path 55 may be formed by a tube separate from the motor housing 21.

When the fourth switching section is switched to a first position, the passage switching valve 54 prevents the refrigerant that has passed through the expansion valve 13 from flowing toward the motor section 14 from the connection passage 53, and permits the refrigerant to flow toward the suction passage 43 via the bypass path 55. When the fourth switching section is switched to a second position, the refrigerant that has passed through the expansion valve 13 is permitted to flow toward the motor section 14 from the connection passage 53, and the refrigerant is prevented from flowing toward the bypass path 55.

Also, a temperature sensor 32, which detects the temperature of the outer surface of the motor housing 21, is provided on the outer surface of the motor housing 21 of the motor section 14. The temperature sensor 32 establishes a signaling connection to the control device 52, and the temperature information detected by the temperature sensor 32 is sent to the control device 52. The control device 52 estimates the temperature in the motor section 14 from the temperature of the outer surface of the motor housing 21 based on a map prepared in advance. When the temperature in the motor section 14 exceeds the predetermined temperature range, the control device 52 switches the operation mode of the heating and cooling system S3 to the first normal mode, the first heating mode, or the first cooling mode such that the temperature in the motor section 14 falls within the predetermined temperature range (target temperature) while considering the temperature in the gear box 30.

When the temperature in the motor section 14 is below the predetermined temperature range and it is not necessary to cool the motor section 14, the control device 52 switches the operation mode of the heating and cooling system S3 to a second normal mode, a second heating mode, or a second cooling mode while considering the temperature in the gear box 30. The second heating mode is a mode in which the gear box 30 is heated while the fourth switching section is switched to the first position so that the motor section 14 is not cooled. During the second heating mode, the refrigerant discharged from the discharge area 11 D flows through the gear box 30 and the expansion valve 13, and then flows through the bypass path 55 bypassing the motor section 14, and reaches the suction area 11S. The compressor 11, the discharge passage 41, the discharge-side switching valve 45, the discharge-side switching passage 46, the gear box 30, the exhaust passage 49, the exhaust-side switching valve 50, the passage 42, the expansion valve 13, the connection passage 53, the passage switching valve 54, the bypass path 55, the suction-side switching valve 47, and the suction passage 43, through which the refrigerant flows during the second heating mode, form a fourth refrigerant circuit. Also, when the refrigerant flows through the fourth refrigerant circuit, the control device 52 switches the first switching section to the first position, the second switching section to the second position, and the third switching section to the second position.

Also, the second normal mode is a mode in which the fourth switching section is switched to the first position so that the motor section 14 is not cooled and the gear box 30 is also not cooled. During the second normal mode, the refrigerant discharged from the discharge area 11 D flows through the condenser 12 and the expansion valve 13, and then flows through the bypass path 55 bypassing the motor section 14, and reaches the suction area 11 S without flowing through the gear box 30. The compressor 11, the discharge-side switching valve 45, the discharge passage 41, the condenser 12, the passage 42, the expansion valve 13, the connection passage 53, the passage switching valve 54, the bypass path 55, the suction-side switching valve 47, and the suction passage 43, through which the refrigerant flows during the second normal mode, form a fifth refrigerant circuit. Also, when the refrigerant flows through the fifth refrigerant circuit, the control device 52 switches the first switching section to the second position, and the second switching section to the second position.

The second cooling mode is a mode in which the gear box 30 is cooled while the fourth switching section is switched to the first position so that the motor section 14 is not cooled. During the second cooling mode, the refrigerant discharged from the discharge area 11 D flows through the condenser 12 and the expansion valve 13, and then flows through the bypass path 55 bypassing the motor section 14 into the gear box 30, and reaches the suction area 11S. The compressor 11, the discharge-side switching valve 45, the discharge passage 41, the condenser 12, the passage 42, the expansion valve 13, the connection passage 53, the passage switching valve 54, the bypass path 55, the suction-side switching valve 47, the suction-side switching passage 48, the discharge-side switching passage 46, the gear box 30, the exhaust passage 49, the exhaust-side switching valve 50, and the exhaust-side switching passage 51 form a sixth refrigerant circuit. When the refrigerant flows through the sixth refrigerant circuit, the control device 52 switches the first switching section to the second position, the second switching section to the first position, and the third switching section to the first position.

Thus, the heating and cooling system S3 of the third embodiment permits the refrigerant to flow through one of the first to sixth refrigerant circuits by switching the first to fourth switching sections by the control device 52.

The third embodiment has the following advantages in addition to the advantages of the first embodiment.
(12) The bypass path 55 connects the section in the connection passage 53 downstream of the expansion valve 13 and upstream of the motor section 14 to the section in the suction passage 43 downstream of the motor section 14 and upstream of the suction-side switching valve 47. Furthermore, the heating and cooling system S3 includes the passage switching valve 54, which is switched to permit the refrigerant that has passed through the expansion valve 13 to flow to the bypass path 55 or to prevent the refrigerant from flowing to the bypass path 55. When it is not necessary to cool the motor section 14, the passage switching valve 54 is switched to permit the refrigerant that has passed through the expansion valve 13 to flow to the bypass path 55. Thus, only the gear box 30 is cooled or heated without cooling the motor section 14 by providing the passage switching valve 54 and the bypass path 55.

The above embodiments may be modified as follows.

In each of the embodiments, the discharge-side switching valve 45 is provided in the discharge passage 41, which connects the discharge area 11 D to the condenser 12. The discharge-side switching valve 45 is connected to the gear box 30 by the discharge-side switching passage 46. The discharge-side switching valve 45 switches the destination of the refrigerant discharged from the discharge area 11 D. However, the discharge area 11 D may be connected to the gear box 30 and the condenser 12 by separate tubes without using the discharge-side switching valve 45, and the tube into which the refrigerant is permitted to flow may be changed in accordance with the mode.

In each of the embodiments, the suction-side switching valve 47 is provided in the suction passage 43, which connects the motor section 14 to the suction area 11S. The suction-side switching valve 47 is connected to the gear box 30 by the suction-side switching passage 48. The destination of the refrigerant that has passed through the expansion valve 13 is switched by the suction-side switching valve 47. However, the motor section 14 may be connected to the gear box 30 and the suction area 11S by separate tubes without using the suction-side switching valve 47, and the tube into which the refrigerant that has passed through the expansion valve 13 is permitted to flow may be changed in accordance with the mode.

In the second embodiment, the oil return passage 21d may be omitted.

In the first or third embodiment, the outlet port 21 b may be located in the motor housing 21 close to the partition wall 22, and the oil return passage 21d, which connects the inlet port 21a to the outlet port 21 b, may be formed in the motor housing 21.

In the first and second embodiments, the expansion valve 13 may not be formed integrally with the motor housing 21, and may be located in the passage 42 between the inlet port 21 a and the condenser 12.

In each of the embodiments, the radiator fins 28a of the stator 28 may be omitted.

In each of the embodiments, the temperature in the gear box 30 may be directly detected by a temperature sensor located in the gear box 30, or may be detected by the temperature sensor located in the gear box 30 based on the temperature of the lubricant.

During the first and second heating modes, if the effect of the gear box 30 is insufficient as the condenser, a passage that connects the exhaust passage 49 to the discharge passage 41, which is between the condenser 12 and the discharge-side switching valve 45, may be separately formed such that the refrigerant flows into the expansion valve 13 via the condenser 12.

In each of the embodiments, the supply port 30a and the exhaust port 30b may be connected to each other by a circulation path in the gear box 30. In this case, the refrigerant supplied to the gear box 30 is permitted to flow through the circulation path to exchange heat in the circulation path.

In each of the embodiments, if the effect of the motor section 14 is not sufficient as the heat exchanger, an additional heat exchanger may be provided.

In each of the embodiments, after the refrigerant discharged from the discharge area 11 D flowed through the condenser 12 and passed through the expansion valve 13, the refrigerant may be introduced into the gear box 30 before being introduced into the motor section 14, and the refrigerant that flowed through the gear box 30 may be introduced into the motor section 14. In this case, the second switching section is provided in a passage that connects the expansion valve 13 to the inlet port 21 a of the motor section 14.

In the first embodiment, the compressor 11 is provided at the bottom portion of the motor housing 21, but the compressor 11 may be located on the partition wall 22.

In each of the embodiments, the kinds of the switching valves 45, 47, 50, 54 may be changed as required.

The first target may be a fuel cell mounted on a vehicle, which is a fuel cell vehicle. In this case, during the first and second cooling modes, the refrigerant that has passed through the expansion valve 13 is introduced into the fuel cell. After the refrigerant has cooled the fuel cell, the refrigerant that has exchanged heat with the fuel cell is introduced into the compressor 11. Furthermore, the refrigerant discharged from the compressor 11 is condensed in the condenser 12, and then passes through the expansion valve 13. Thus, the fuel cell functions as the heat exchanger and the second target. During the first and second heating modes, the refrigerant that has passed through the expansion valve 13 is introduced into a separately provided heat exchanger, and then introduced into the compressor 11. Furthermore, the refrigerant discharged from the compressor 11 is introduced into the fuel cell. After the refrigerant has heated the fuel cell, the refrigerant condensed in the fuel cell is introduced into the expansion valve 13.

In the first embodiment, the heating and cooling system S1 is configured such that the refrigerant circulation circuit 10 functions as the first to third refrigerant circuits. However, the heating and cooling system S1 may be configured in such a manner that the discharge-side switching valve 45, the suction-side switching valve 47, and the exhaust-side switching valve 50 are controlled by the control device 52 such that the refrigerant circulation circuit 10 serves as at least one of the first to third refrigerant circuits.

In the third embodiment, the heating and cooling system S3 is configured such that the refrigerant circulation circuit 10 serves as the first to sixth refrigerant circuits. However, the heating and cooling system S3 may be configured in such a manner that the discharge-side switching valve 45, the suction-side switching valve 47, the exhaust-side switching valve 50, and the passage switching valve 54 are controlled by the control device 52 such that the refrigerant circulation circuit 10 serves as at least one of the first to sixth refrigerant circuits.

A heating and cooling system, which includes a refrigerant circulation circuit, first and second targets, first and second refrigerant circuits, a first switching section, and a control device, is disclosed. The first switching section is selectively switched between a first position at which a refrigerant discharged from a discharge area of a compressor is permitted to flow to the first target and a second position at which the refrigerant is not permitted to flow to the first target. The control device switches the first switching section to the first position so that the refrigerant circulation circuit functions as a first refrigerant circuit, thereby heating the first target and cooling the second target. The control device switches the first switching section to the second position so that the refrigerant circulation circuit functions as a second refrigerant circuit, thereby cooling only the second target.

## Claims

1. A heating and cooling system comprising:
a refrigerant circulation circuit (10) including a compressor (11), a condenser (12), and an expansion valve (13);
a first target (30) and a second target (14) arranged in the refrigerant circulation circuit (10), the first and second targets (30, 14) requiring temperature adjustment;
a first refrigerant circuit, in which, after being discharged from a discharge area (11 D) of the compressor (11) and flowing through the first target (30) and the expansion valve (13), the refrigerant flows through the second target (14) and into a suction area (11S) of the compressor (11);
a second refrigerant circuit, in which, after being discharged from the discharge area (11 D) and flowing through the condenser (12) and the expansion valve (13), the refrigerant flows through the second target (14) and into the suction area (11S);
a first switching section located in the refrigerant circulation circuit (10), the first switching section being selectively switched between a first position, at which the refrigerant discharged from the discharge area (11 D) is permitted to flow to the first target (30), and a second position, at which the refrigerant is not permitted to flow to the first target (30); and
a control section (52) for controlling the first switching section;
the heating and cooling system being **characterized in that** the control section (52) switches the first switching section to the first position such that the refrigerant circulation circuit (10) functions as the first refrigerant circuit, thereby heating the first target (30) and cooling the second target (14), and
wherein the control section (52) switches the first switching section to the second position such that the refrigerant circulation circuit (10) functions as the second refrigerant circuit, thereby cooling only the second target (14).

2. The heating and cooling system according to claim 1, further comprising:
a third refrigerant circuit, in which, after being discharged from the discharge area (11 D) and flowing through the condenser (12) and the expansion valve (13), the refrigerant flows through the second target (14) and further through the first target (30), and then flows into the suction area (11S), thereby cooling the first target (30) and the second target (14);
a second switching section located in the refrigerant circulation circuit (10), the second switching section being selectively switched between a first position, at which the refrigerant that has passed through the second target (14) is permitted to flow to the first target (30), and a second position, at which the refrigerant is not permitted to flow to the first target (30); and
a third switching section located in the refrigerant circulation circuit (10), which is selectively switched between a first position, at which the refrigerant that has passed through the first target (30), is permitted to flow to the suction area (11S), and a second position, at which the refrigerant is not permitted to flow to the suction area (11S),
wherein, when the refrigerant circulation circuit (10) functions as the first refrigerant circuit, the control section (52) switches the first switching section to the first position, the second switching section to the second position, and the third switching section to the second position,
wherein, when the refrigerant circulation circuit (10) functions as the second refrigerant circuit, the control section switches the first switching section to the second position and the second switching section to the second position, and
wherein, when the refrigerant circulation circuit (10) functions as the third refrigerant circuit, the control section (52) switches the first switching section to the second position, the second switching section to the first position, and the third switching section to the first position.

3. The heating and cooling system according to claim 2, further comprising:
a bypass path (55), which connects a section in the refrigerant circulation circuit (10) downstream of the expansion valve (13) and upstream of the second target (14) to a section in the refrigerant circulation circuit (10) downstream of the second target (14) and upstream of the second switching section, thereby bypassing the second target (14);
a fourth switching section located in the refrigerant circulation circuit (10), which is selectively switched between a first position, at which the refrigerant that has passed through the expansion valve (13) is permitted to flow to the bypass path (55), and a second position, at which the refrigerant is not permitted to flow to the bypass path (55);
a fourth refrigerant circuit, in which, after being discharged from the discharge area (11 D) and flowing through the first target (30) and the expansion valve (13), the refrigerant flows through the bypass path (55) and into the suction area (11S), thereby heating only the first target (30);
a fifth refrigerant circuit, in which, after being discharged from the discharge area (11 D) flowing through the condenser (12) and the expansion valve (13), the refrigerant flows through the bypass path (55) and into the suction area (11S), so that the temperature of the first and second targets (30, 14) are not adjusted; and
a sixth refrigerant circuit, in which, after being discharged from the discharge area (11 D) and flowing through the condenser (12) and the expansion valve (13), the refrigerant flows through the bypass path (55), and then through the first target (30) and into the suction area (11 D), thereby cooling only the first target (30),
wherein, when the refrigerant circulation circuit (10) functions as one of the first to third refrigerant circuits, the control section (55) switches the fourth switching section to the second position,
wherein, when the refrigerant circulation circuit (10) functions as the fourth refrigerant circuit, the control section (55) switches the first switching section to the first position, the second switching section to the second position, the third switching section to the second position, and the fourth switching section to the first position,
wherein, when the refrigerant circulation circuit (10) functions as the fifth refrigerant circuit, the control section (55) switches the first switching section to the second position, the second switching section to the second position, and the fourth switching section to the first position, and
wherein, when the refrigerant circulation circuit (10) functions as the sixth refrigerant circuit, the control section (55) switches the first switching section to the second position, the second switching section to the first position, the third switching section to the first position, and the fourth switching section to the first position.

4. The heating and cooling system according to any one of claims 1 to 3, wherein the second target (14) is a drive motor (M) mounted on a vehicle and a motor housing (21) accommodating the drive motor (M),
wherein the first target (30) is a gear box arranged next to the drive motor (M) to transmit drive force of the drive motor (M) to an axle of the vehicle, and
wherein a partition wall (22) is arranged between the motor housing (21) and the gear box.

5. The heating and cooling system according to claim 4, wherein the compressor (11) is directly actuated by the drive motor (M).

6. The heating and cooling system according to any one of claims 1 to 5, wherein the first switching section includes a discharge passage (41) that connects the discharge area (11 D) to the condenser (12), a discharge-side switching valve (45) located in the discharge passage (41), and a discharge-side switching passage (41) that connects the discharge-side switching valve (45) to the first target (30).

7. The heating and cooling system according to any one of claims 1 to 6, wherein the second switching section includes a suction passage (43) through which the refrigerant that has passed through the expansion valve (13) flows, a suction-side switching valve (47) located in the suction passage (43), and a suction-side switching passage (48) that connects the suction-side switching valve (47) to the first target (30).
